# EUROPÄISCHE PATENTSCHRIFT

(11) **EP 2 507 514 B1**
(45) Veröffentlichungstag und Bekanntmachung des Hinweises auf die Patenterteilung: **08.07.2015**
(21) Anmeldenummer: 10803346.5
(22) Anmeldetag: 30.11.2010
(51) Int. Cl.: F03D 11/04, F03D 1/00

(54) **WINDENERGIEANLAGE MIT HEBEVORRICHTUNG**
WIND TURBINE HAVING A LIFTING DEVICE
ÉOLIENNE POURVUE D'UN DISPOSITIF DE LEVAGE

(30) Priorität: 01.12.2009 DE 102009056245
(43) Veröffentlichungstag der Anmeldung: 10.10.2012
(73) Patentinhaber: Aerodyn Engineering GmbH, 24768 Rendsburg (DE)
(72) Erfinder: SIEGFRIEDSEN, Sönke, 24768 Rendsburg (DE)
(74) Vertreter: Lobemeier, Martin Landolf
(86) Internationale Anmeldenummer: PCT/DE2010/001381
(87) Internationale Veröffentlichungsnummer: WO 2011/066819

(56) Entgegenhaltungen:
- WO-A2-2008/088408
- WO-A2-2009/056701
- NL-C2- 1 014 553

## Beschreibung

Die Erfindung betrifft eine Windenergieanlage mit Hebevorrichtung. Insbesondere betrifft die Erfindung eine Windenergieanlage mit einem Turm, einer im Wesentlichen außerhalb des oberen Turmquerschnitts angeordneten, einen Rotor mit wenigstens einem an einer Nabe angeschlossenen Rotorblatt, und einen Generator aufweisenden Energiewandlungseinheit, einem auf dem Turm angeordneten, die Energiewandlungseinheit mit dem Turm verbindenden Kopfträger, ein am Kopfträger befestigtes, sich in Längsrichtung der Energiewandlungseinheit erstreckendes Tragwerk, und einem Seilzug zum Heben und Senken der Energiewandlungseinheit.

Das Errichten von Windenergieanlagen ist bekanntermaßen ein technisch und logistisch sehr aufwändiges Unterfangen. Insbesondere erfordern die hohen Gewichte der Windenergieanlage-Komponenten sowie deren Abmessungen den Einsatz von Spezialgerät, wie z.B. Spezialkränen, deren Einsatz gerade bei der Installation von Offshore-Windenergieanlagen, einer langfristigen Planung unterliegt.

Diesem Problem versucht man nun seit längerem dadurch zu begegnen, dass der Turm einer Windenergieanlage selbst als Kran ausgebildet ist bzw. einen Kran als integralen Bestandteil der Windenergieanlage aufweist, um den üblicherweise bei der Errichtung von Windenergieanlagen entstehenden Aufwand zumindest teilweise zu minimieren.

So offenbart die EP 0 783 630 A1 eine Lasthebevorrichtung an einer Windkraftanlage, bei der ein verschwenkbarer Kranausleger am auf dem Turm angeordneten Maschinenträger angeordnet ist. Der Kran weist einen in der Drehachse der Windnachführung angeordneten Ausleger auf, der zu beiden Seiten des Turms verschwenkbar ist. Das Hubseil wird über mehrere Umlenkrollen geführt und schließlich von einer Winde aufgenommen bzw. von dieser abgegeben. Obwohl nicht ausdrücklich erwähnt, wird der Kranausleger nach Errichtung der Windenergieanlage von der Gondelverkleidung aufgenommen, sodass die Gondelverkleidung vor erneutem Gebrauch des Krans zunächst wieder entfernt werden muss. In ähnlicher Weise zeigt die DE 199 55 516 C1 eine Windkraftanlage und ein Verfahren zum Aus- und Einbau der Hauptkomponenten des Maschinengehäuses einer Windkraftanlage auf, mit der durch eine im Boden der Gondel vorgesehene Öffnung das Getriebe und der Generator der Windenergieanlage vom Boden angehoben und direkt in die Gondel gebracht werden kann. Hierfür ist der Kranausleger verschwenkbar im Inneren der Gondel angeordnet, wobei, um den Kran in Betrieb zu nehmen, die obere Verkleidung der Gondel geöffnet werden muss.

Nachteilig an diesen bekannten Ausführungen ist, dass die vorgeschlagenen Kranausleger aufgrund ihrer Verschwenkbarkeit aufwändig zu konstruieren sind und die herkömmlichen Bauteile der Windenergieanlage zusätzlich für die Aufnahme der bei Verwendung des Kranauslegers auftretenden Kräfte ausgelegt sein müssen. Darüber hinaus müssen die Gondeln zur Verwendung des Krans geöffnet bzw. die Gondelverkleidung entfernt werden.

Weiter ist aus der WO 2008/148874 A1 eine Windenergieanlage bekannt, bei dem in einem auf dem Turm einer Windenergieanlage aufgebrachten Rahmen ein Hebezeug vorgesehen ist, das beim Aufbau dieser Windenergieanlage eine aus Rotor, Nabe, Rotorblättern und Generator vorgefertigte Energiewandlungseinheit anheben kann, die am auf dem Turm angeordneten Rahmen und somit mit dem Turm verbunden wird. Der Rahmen ist dabei derart ausgestaltet, dass dieser über den oberen Turmquerschnitt hinausragt, sodass die Energiewandlungseinheit außerhalb des oberen Turmquerschnitts angeordnet ist. Aufgrund dieser Anordnung kann das Anheben der Windenergieanlage und das Verbinden mit dem Rahmen ohne Gefahr von Kollisionen mit dem Turm erfolgen.

Trotz dieses grundsätzlich vorteilhaften Aufbaus ist an dieser vorbekannten Windenergieanlage nachteilig, dass der Abstand der Position, an der das Hubseil aus einer horizontalen Ebene in eine vertikale Ebene überführt wird, vorgegeben ist. Damit ist aber dem Betrieb des Hebezeugs, z.B. aufgrund von Windgeschwindigkeitshöchstgrenzen, die sicherstellen sollen, dass eine Kollision der Energiewandlungseinheit mit dem Turm verhindert wird, enge Grenzen gesetzt.

Zur Lösung dieses zuletzt angesprochenen Problems wurde mit der NL 1 014 553 C2 eine Hebeeinrichtung vorgeschlagen, die einen um eine vertikale Achse schwenkbaren Ausleger aufweist, auf dem eine Laufkatze verfahrbar eingerichtet ist, durch die der Abstand einer anzuhebenden Energiewandlungseinheit zum Kopfträger der Windenergieanlage verändert werden kann. Bei Nichtgebrauch kann der Ausleger zur der Energiewandlungseinheit gegenüberliegenden Seite verschwenkt werden.

Allerdings unterliegt diese Ausgestaltung aufgrund ihrer exponierten Lage der Gefahr von Korrosion und witterungsbedingten Ermüdungserscheinungen in extremen Klimaten und ist daher auch nicht zum sicheren Anheben und Absetzen über lange Zeiträume geeignet. Dieses betrifft insbesondere die Antriebe des Hebezeugs wie auch die Hubseile selbst.

Ausgehend von diesem Stand der Technik ist es daher Aufgabe der Erfindung, die bekannte Windenergieanlage dahingehend weiterzuentwickeln, dass die Energiewandlungseinheit in angehobener Position besser zum Verbinden mit dem Turm der Windenergieanlage ausgerichtet werden und die Windenergieanlage damit insgesamt leichter errichtet, gewartet und repariert werden kann. Insbesondere sollen die Einrichtungen und Mittel zum Heben und Senken der Energiewandlungseinheit dabei auch eine möglichst lange Lebensdauer erreichen können.

Die Aufgabe wird durch die Windenergieanlage mit den Merkmalen von Anspruch 1 gelöst. Die Unteransprüche geben vorteilhafte Ausgestaltungen der Erfindung wieder.

Besonders vorteilhaft kann die Erfindung an der aus der DE 10 2007 012 408 A1 bekannten Windenergieanlage eingesetzt werden. Auf den prinzipiellen Aufbau dieser vorbekannten Anlage wird vollständig Bezug genommen. Bei dieser Windenergieanlage sind das Getriebe, der Generator und die Windnachführung in separaten, miteinander verschraubten Gehäusen angeordnet, wobei die Gehäuse als lastübertragende Strukturen zur Übertragung der maximalen statischen und dynamischen Rotorlasten ausgelegt sind. Die sich aus der bekannten Konstruktion ergebenden Vorteile sind unter anderem eine sehr kompakte und leichte Gesamtbauweise.

Der Vorteil dieser bevorzugten Ausgestaltung liegt darin, dass insbesondere bei Installationen im Offshorebereich die gesamte Energiewandlungseinheit an Land vorinstalliert und mit einem Wasserfahrzeug zum Ort der Errichtung transportiert und ohne weitere Hilfsmittel am Turm der Windenergieanlage hochgezogen und über den Kopfträger mit diesem verbunden werden kann. Damit sinkt nicht nur der Logistik- und Arbeits-, sondern auch der Zeit-, Kosten- und Personalaufwand, der zur Errichtung einzelner Windenergieanlagen oder ganzer Windparks notwendig ist.

Darüber hinaus ist es bei einer defekten (Offshore-)Windenergieanlage ohne weiteres möglich, eine gesamte, z.B. aus Rotor, Nabe, Rotorblättern, Rotorlager, Getriebe und Generator bestehende defekte Energiewandlungseinheit vom Turm abzunehmen und gegen eine zur defekten Windenergieanlage mitgeführte intakte Energiewandlungseinheit auszutauschen, wobei die defekte Energiewandlungseinheit darauf unter optimalen Arbeitsbedingungen im Werk überprüft und unter Austausch einzelner Komponenten repariert werden kann. Hiermit geht ebenfalls aufgrund selbst im Schadensfall sehr niedriger Stillstandzeiten eine erhebliche Kosten- und Zeitersparnis einher, wie es beispielsweise auch in der WO 2008/113334 A2 vorgesehen ist, wobei vorliegend allerdings auf den mit dem Wasserfahrzeug mitgeführten Kran verzichtet werden kann.

Speziell vorteilhaft ist es, wenn die zu errichtende Windenergieanlage eine Zweiblattanlage ist, da der Transport einer vormontierten, zwei linear ausgerichtete Blätter aufweisenden Energiewandlungseinheit zu Land und zu Wasser im Gegensatz zu einer (wenn auch nur teilweise) vormontierten, einen Dreiblatt-Rotor aufweisenden Energiewandlungseinheit aufgrund der beim Transport zu beachtenden Fahrzeugbreite und -höhe weniger Einschränkungen unterliegt.

Schließlich ist es von Vorteil, dass sich das Tragwerk außerhalb des Kopfträgers befindet, sodass die erfindungsgemäße Hebevorrichtung ohne aufwändige Vorbereitungsmaßnahmen, z.B. Entfernen einer Verkleidung, verwendet werden kann. Zum anderen ist die den Kranausleger tragende Gondel ohnehin für das Tragen der außerhalb des oberen Turmdurchschnitts angeordneten Lasten ausgelegt.

Die Erfindung wird anhand eines besonders bevorzugt ausgestalteten Ausführungsbeispiels näher erläutert. Dabei zeigen:
- Fig. 1: eine perspektivische Gesamtansicht einer Windenergieanlage nach einem besonders bevorzugt ausgestalteten Ausführungsbeispiel;
- Fig. 2: eine perspektivische Detailansicht der Windenergieanlage aus Fig. 1 im Bereich der am Kopfträger befestigten Energiewandlungseinheit;
- Fig. 3: eine perspektivische Detailansicht der besonders bevorzugt ausgestalteten Windenergieanlage mit der vom Kopfträger gelösten Energiewandlungseinheit;
- Fig. 4: eine perspektivische Detailansicht der besonders bevorzugt ausgestalteten Windenergieanlage mit der vom Kopfträger gelösten und ein Stück abgelassenen Energiewandlungseinheit;
- Fig. 5: eine perspektivische Gesamtansicht der besonders bevorzugt ausgestalteten Windenergieanlage mit der vom Kopfträger gelösten und am Turmfuß abgesetzten Energiewandlungseinheit; und
- Fig. 6: eine Schnittansicht eines besonders bevorzugt ausgebildeten Linearantriebs im eingefahrenen Zustand (a), im ausgefahrenen Zustand mit eingefahrenem Greifzylinder (b) und im ausgefahrenen Zustand mit ausgefahrenem Greifzylinder (c).

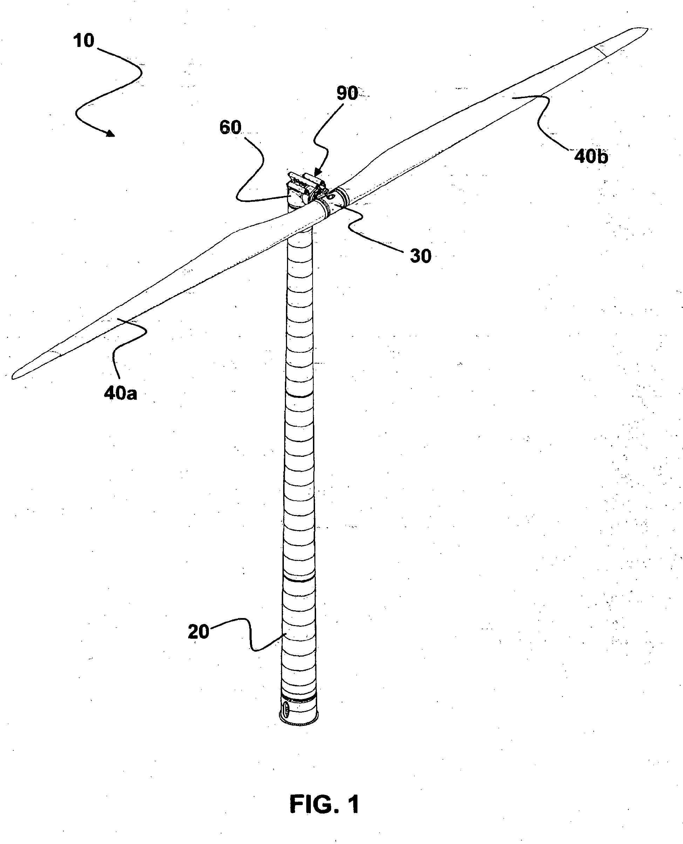

Fig. 1 zeigt eine perspektivische Gesamtansicht einer in ihrem grundsätzlichen Aufbau aus der DE 10 2007 012 408 A1 bekannten Windenergieanlage, die mit der erfindungsgemäßen Hebevorrichtung ausgestattet ist. Diese Windenergieanlage 10 besteht aus einem Turm 20, einem auf dem Turm 20 angeordneten als Kopfträger 60 bezeichneten bevorzugt als Gehäuse ausgebildeten Element, das auf seiner einen Seite mit dem Turm 20 bevorzugt über eine Einrichtung zur Windnachführung und auf seiner anderen Seite mit der Energiewandlungseinheit der Windenergieanlage 10 verbunden ist.

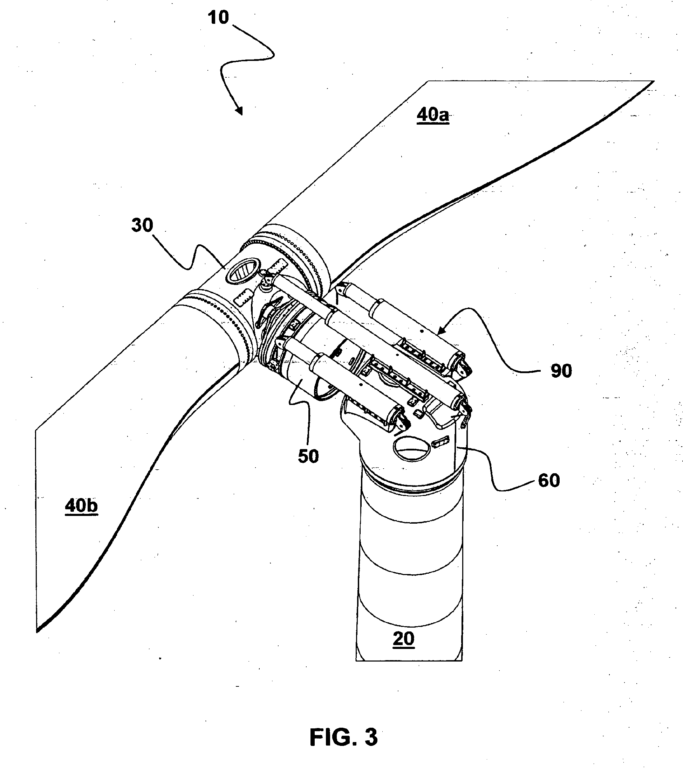

Die Energiewandlungseinheit besteht bevorzugt aus einem Rotor mit einer zwei Blätter 40a, 40b tragenden Nabe 30, wobei der Rotor vorteilhaft in einem Rotorlager gelagert ist und über ein geeignetes Getriebe einen (in Fig. 3 mit Bezugszeichen versehenen) Generator 50 antreibt.

Dabei ist zu erkennen, dass der die Energiewandlungseinheit mit dem Turm 20 verbindende Kopfträger 60 nicht oder kaum über den oberen Turmquerschnitt hinausragt bzw. die Energiewandlungseinheit im Wesentlichen außerhalb des oberen Turmquerschnitts angeordnet ist. Diese Anordnung erleichtert ein Hochziehen oder Absetzen der Energiewandlungseinheit zum Ort der Befestigung am Kopfträger 60 aufgrund des einfach einzuhaltenden Abstands zwischen Energiewandlungseinheit und Turm 20.

Am bzw. bevorzugt auf dem Kopfträger 60 befindet sich eine besonders bevorzugt ausgestaltete Hebeeinrichtung zum Heben und Senken der Energiewandlungseinheit, beispielsweise zum Errichten einer Windenergieanlage oder zur Reparatur oder Austausch der Energiewandlungseinheit im Falle einer defekten Windenergieanlage. Im gezeigten Ausführungsbeispiel ist die Hebeeinrichtung im Linearantrieb 90 integriert, sodass eine besonders kompakte und die Hebeeinrichtung vor Umwelteinflüssen schützende Bauform erreicht werden kann.

Der Linearantrieb 90 kann aber in einem sehr einfach ausgebildeten Fall auch aus einem am Kopfträger 60 befestigten, sich in Richtung der Nabe 30 erstreckenden Tragwerk, das beispielsweise teleskopartig verlängerbar ist, und einem auf dem Tragwerk fahrenden Schlitten oder einer Laufkatze, die die Umlenkeinrichtung(en) tragen, gebildet sein.

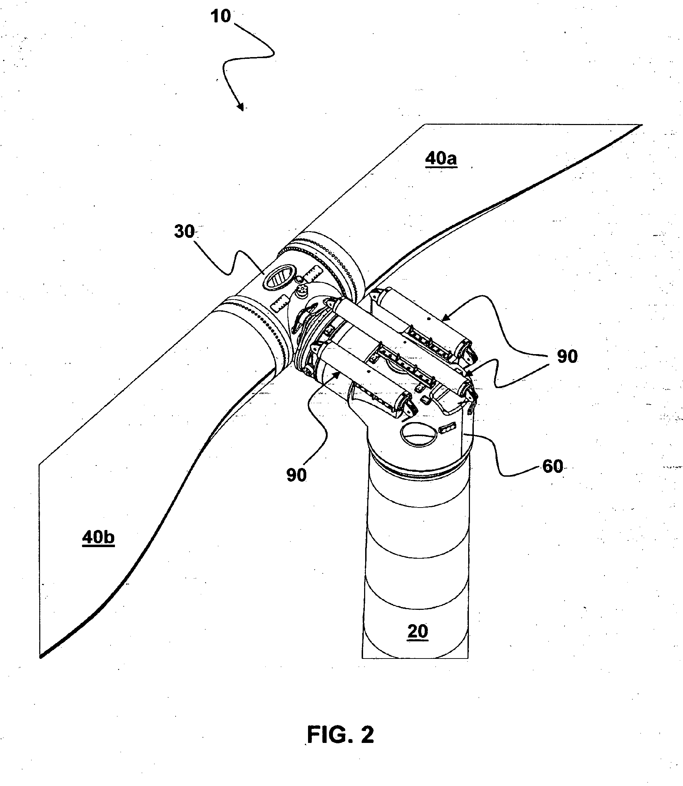

Fig. 2 zeigt eine vergrößerte perspektivische Detailansicht der Windenergieanlage aus Fig. 1 im Bereich des Kopfträgers 60. Auf dem Kopfträger 60 ist eine Mehrzahl von als hydraulische Linearzylinder ausgestaltete Linearantrieben 90 zu erkennen, die die Hebeeinrichtung bilden. Im vorliegenden Fall sind drei Linearantriebe 90 zu erkennen, wobei eine besonders bevorzugte Ausgestaltung eine gerade Anzahl von Linearantrieben 90, z.B. vier Linearantriebe 90, vorsieht. Der Hub der mehreren Linearantriebe 90 kann identisch sein. Bevorzugt ist jedoch vorgesehen, dass die am Kopfträger 60 in Bezug auf dessen Längsachse weiter Außen angebrachten Linearantriebe 90 einen geringeren Hub als die zwischen diesen angeordneten Linearantriebe 90 aufweisen. Während die äußeren Linearantriebe 90 ausgefahren ungefähr bis zu dem Bereich über dem Schwerpunkt der gesamten Energiewandlungseinheit reichen sollen, werden die inneren Linearantriebe 90 über diesen Punkt hinaus ausgefahren und bevorzugt bis über die Nabe 30 der Energiewandlungseinheit reichend positioniert. Diese Anordnung erleichtert ein Abnehmen und Ansetzen der in häufigen Fällen bis zu 5° geneigten am Kopfträger befestigten Energiewandlungseinheit, da die Energiewandlungseinheit mit dem zwischen den Außen angeordneten Linearantrieben 90 innen liegenden Linearantrieben 90 gekippt werden kann.

Fig. 3 zeigt eine perspektivische Detailansicht der besonders bevorzugt ausgestalteten Windenergieanlage 10 mit der vom Kopfträger 60 gelösten Energiewandlungseinheit. Es ist deutlich zu erkennen, dass die Energiewandlungseinheit, insbesondere der Generator 50 bzw. das Generatorgehäuse 50 vom Kopfträger 60 getrennt und entfernt beabstandet ist und von den ausgefahrenen Linearantrieben 90 abhängt.

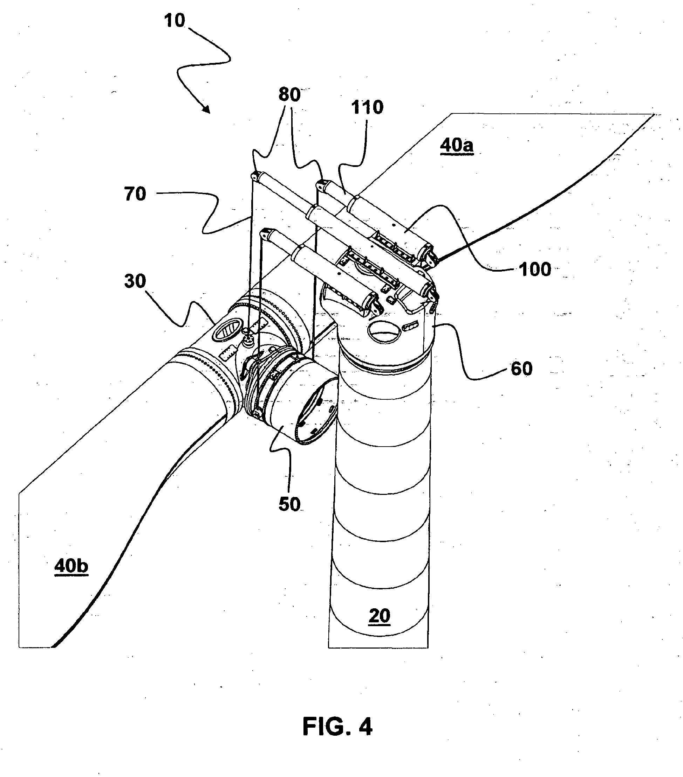

Dieses erfolgt - wie Fig. 4 deutlicher zeigt - dadurch, dass der Linearantrieb 90 aus einem äußeren Zylinder 100 und einem inneren Zylinder 110 gebildet ist, die zueinander bevorzugt hydraulisch verschiebbar sind. Der innere Zylinder 110 trägt an seinem freien Ende eine Umlenkeinrichtung 80 zum Überführen des Hubseils 70 aus einer im Wesentlichen horizontalen Ebene in eine vertikale Ebene. Das Hubseil 70 ist an Anlenkpunkten an der Nabe 30 bzw. an anderen Abschnitten der Energiewandlungseinheit, z.B. am Generatorgehäuse oder wie hier am Generatorgehäuse, angebracht und hängt von der Mehrzahl der Umlenkeinrichtungen 80 der Mehrzahl von Linearantrieben 90 ab.

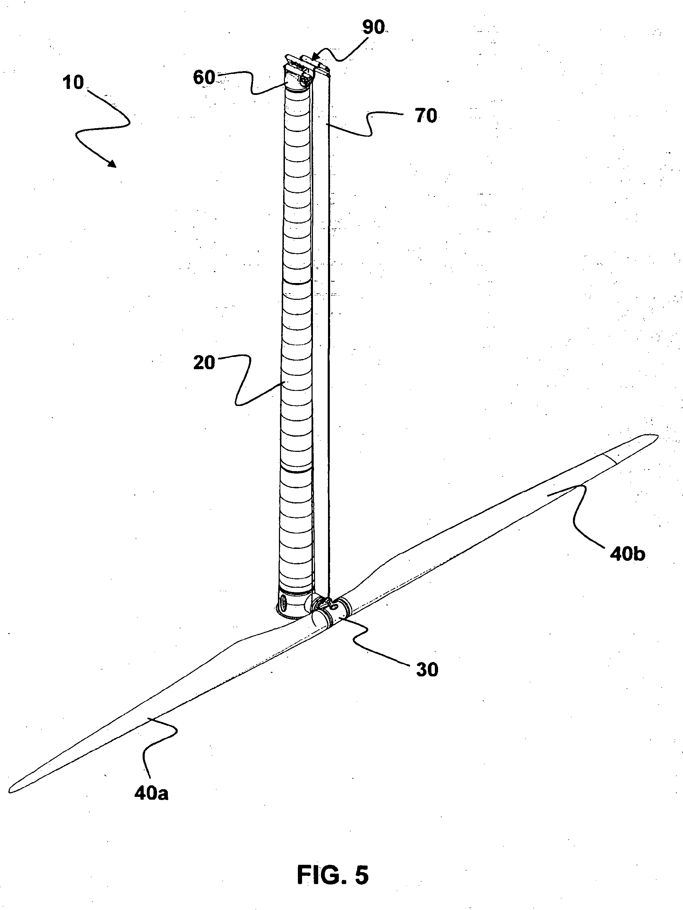

Fig. 5 zeigt schließlich eine ausgehend von Fig. 1 über die in den Fig. 2, 3 und 4 dargestellten Verfahrensschritte vollständig abgenommene und zum Fuß des Turms 20 der Windenergieanlage 10 abgelassene Energiewandlungseinheit.

Die erfindungsgemäß ausgestaltete Windenergieanlage 10 ermöglicht, dass eine am Kopfträger 20 befestigte Energiewandlungseinheit durch bevorzugt mehrere Hubseile 70, die über mehrere Umlenkeinrichtungen 80 geführt sind, mit einer Hebeeinrichtung verbunden wird. Nach Lösen der Verbindung der Energiewandlungseinheit mit dem Kopfträger 60 werden die Umlenkeinrichtungen 80 mit Hilfe von Linearantrieben 90 zum Vergrößern des Abstands der Energiewandlungseinheit vom Turm 20 vom Turm 20 weg ausgefahren, wobei bevorzugt auch der Winkel der Längsachse der Energiewandlungseinheit verändert werden kann. Mit vergrößertem Abstand zum Turm 20 kann die Energiewandlungseinheit abgelassen und abtransportiert werden.

Der mit der erfindungsgemäßen Windenergieanlage 10 durchgeführte Vorgang des Anhebens bzw. Absetzens der Energiewandlungseinheit der Windenergieanlage 10 wird anhand des Absetzvorgangs einer defekten Energiewandlungseinheit näher erläutert. Zunächst ist es zum Ablassen und Absetzen der Energiewandlungseinheit notwendig, dass die Hubseile 70 an den Anlenkpunkten an der Energiewandlungseinheit befestigt werden, sofern diese nicht dauerhaft an der angehobenen und am Kopfträger 60 befestigten Energiewandlungseinheit befestigt sind. Zur Befestigung der Hubseile 70 an der Nabe 30 ist es hingegen notwendig, den oder die innen liegenden Linearantriebe 90 auszufahren, sodass deren jeweilige Umlenkeinrichtung 80 über dem an der Nabe 30 vorgesehenen Anlenkpunkt zu liegen kommt, das Hubseil 70 abgelassen werden und mit dem Anlenkpunkt an der Nabe 30 (manuell) befestigt werden kann.

Vor dem Lösen der Flanschverbindung von Energiewandlungseinheit und Kopfträger 60, also insbesondere der Verbindung von Generatorgehäuse 50 und Kopfträger 60, werden alle Hubseile 70 unter eine Vorspannung gebracht, um das Gewicht der Energiewandlungseinheit sofort aufnehmen und ein problemloses Lösen der Flanschverbindung ermöglichen zu können. Hierfür sind mehrere Sensoren vorgesehen, die den am Flansch lastenden Druck, den Druck in den Hubzylindern und/oder die an den Hubseilen 70 anliegenden Lasten erfassen und die entsprechenden Werte einer auf die die Hebevorrichtung bildenden Elemente wirkende Steuerung zuführen, die die Vorspannung der Hubseile 70 einstellt.

Ist die Verbindung zwischen der Energiewandlungseinheit und dem Kopfträger 60 gelöst, werden alle Linearantriebe 90 ausgefahren und die vom Kopfträger 60 gelöste Energiewandlungseinheit in horizontaler Richtung in eine weiter vom Turm 20 der Windenergieanlage entfernte Position gebracht. Das Ausfahren der Linearantriebe 90 muss dabei derart koordiniert erfolgen, dass die Umlenkeinrichtungen 80 mit der identischen Geschwindigkeit gleichzeitig ausgefahren werden und die gesamte Energiewandlungseinheit in horizontaler Richtung parallel verschoben wird.

Ebenso muss auch das Ablassen der Energiewandlungseinheit von der ausgefahrenen Position koordiniert erfolgen. Hierfür kann beispielsweise ein Neigungsmesser an der Nabe 30 installiert sein, dessen Messdaten über Funk an die Steuerung übermittelt werden. Aufgrund dieser Messdaten stellt die Steuerung sicher, dass die Energiewandlungseinheit beim Ablassen nicht verdreht oder verkippt wird. Die Energiewandlungseinheit sollte also horizontal ausgerichtet abgelassen werden. Alternativ oder zusätzlich sollte auch die abgegebene Seillänge überprüft werden, wobei hier auf die üblichen Systeme zur Längenmessung von Seilen, z.B. mittels eines Reibrads, das bevorzugt die Umlenkeinrichtung 80 selbst ist, oder anhand von in den Hubseilen 70 eingebrachten Markierungen, zurückgegriffen werden kann. Dabei sorgt auch das Ablassen einer identischen Seillänge jedes Hubseils 70 von jeder Umlenkeinrichtung 80 für einen parallelen Versatz der Energiewandlungseinheit in vertikaler Richtung bis die Energiewandlungseinheit vollständig am Boden abgelassen ist. Alternativ kann die Steuerung je nach Windsituation auch derart eingerichtet sein, dass die Hubseile 70, z.B. mit Hilfe der die vordere Klemmeinrichtung 140 verschiebenden Linearantriebe 140 (siehe unten), unterschiedlich und voneinander unabhängig angesteuert werden, um beispielsweise ungleichmäßig auf die Energiewandlungseinheit wirkenden Windlasten entgegenzuwirken und eine Auslenkung der vom Kopfträger 60 gelösten Energiewandlungseinheit zu verhindern.

Ebenso kann eine Energiewandlungseinheit beim Errichten einer Windenergieanlage 10 oder als Ersatz einer defekten Energiewandlungseinheit zum Kopfträger 60 angehoben, gegebenenfalls geneigt, mittels der Linearantriebe 90 eingefahren und mit dem Kopfträger 60 verbunden werden.

Zusätzlich zu den oben genannten Merkmalen kann die Energiewandlungseinheit eine Einrichtung aufweisen, die ein geführtes Abstützen der Energiewandlungseinheit am Turm 20 beim Anheben oder Absetzen der Energiewandlungseinheit ermöglicht. Diese kann aus einem mit Rädern versehenen Rahmen bestehen, wobei die Räder in ihrem Abstand zur Energiewandlungseinheit z.B. mittels weiterer Linearantriebe veränderbar sind, um sich an den in Längsrichtung des Turms 20 ändernden Turmdurchmesser anzupassen. Die Einrichtung kann auch als von der Energiewandlungseinheit getrennte Vorrichtung vorgesehen sein, die bei Bedarf mit der Energiewandlungseinheit verbunden werden kann.

Weiter kann auch ein Gestell vorgesehen sein, dass die Energiewandlungseinheit am Fuß des Turms zum Transport bzw. zur Lagerung der Energiewandlungseinheit aufnimmt.

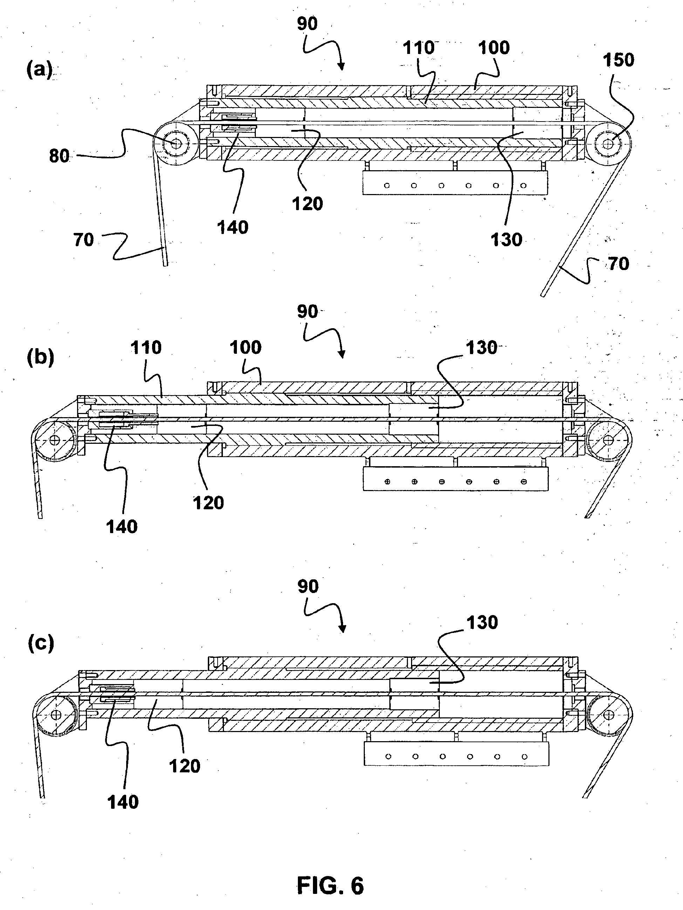

Schließlich wird in Fig. 6 ein besonders bevorzugt ausgestalteter Linearantrieb gezeigt, der die den Hebevorgang ausführenden Elemente aufweist. Der Linearantrieb 90 ist bevorzugt aus einem äußeren Zylinder 100 und einem inneren Zylinder 110 gebildet, wobei die beiden Zylinder 100, 110 gegeneinander verschiebbar ausgebildet sind und der äußere Zylinder 100 den inneren Zylinder 110 in eingefahrenem Zustand aufnimmt. Die Verfahrbarkeit des inneren Zylinders 110 gegenüber dem äußeren Zylinder 100 bzw. die Teleskopierbarkeit des Linearantriebs 90 wird durch eine Hydraulik gewährleistet, die für die enstprechenden Lasten ausgelegt ist.

Die beiden Zylinder 100, 110 sind als Hohlzylinder 100, 110 ausgebildet, wobei das Hubseil 70 durch den von vom äußeren und vom inneren Hohlzylinder 100, 110 gebildeten Hohlraum geführt ist. Das Hubseil 70 wird am dem Turm 20 abgewendeten Ende des Linearantriebs 90 über die am inneren Hohlzylinder 110 angeordnete Umlenkeinrichtung 80 geführt, sodass das Hubseil 70 aus einer im Wesentlichen horizontalen Ebene in eine vertikale Ebene überführt wird. Auf der dem Turm 20 zugewandten Seite des Linearantriebs 90 ist bevorzugt eine weitere mit dem äußeren Hohzylinder 100 verbundene Umlenkeinrichtung 150 vorgesehen, über die das Hubseil 70 durch die Wandung des Kopfträgers 60 in den Turm 20 der Windenergieanlage 10 geführt wird. Wird die Hebeeinrichtung also nicht benötigt ist der Linearantrieb 90 eingefahren (siehe Fig. 1a) und das Hubseil 70 kann nahezu vollständig, bevorzugt mittig im Turm 20 hängend gelagert werden.

Besonders bevorzugt weist der Linearantrieb 90 auch die Komponenten zum Anheben und/oder Absenken des Hubseils 70, also die Hebeeinrichtung an sich, auf. Hierfür sind zwei bevorzugt hydraulisch betriebene Seilklemmen 120, 130 vorgesehen, die bevorzugt im inneren Hohlzylinder 110 angeordnet sind. Eine der Seilklemmen 120 ist im inneren Hohlzylinder 100 bevorzugt mittels eines weiteren Hydraulikzylinders 140 verfahrbar eingerichtet, wohingegen die andere Seilklemme 130 in ihrer Position im inneren Hohlzylinder 110 fixiert ist.

Der Hebevorgang wird durch eine auf die Seilklemmen 120, 130 und den weiteren Hydraulikzylinder 140 wirkende Steuerung erreicht, die eine wechselseitige Klemmung des Hubseils 70 durch die Seilklemmen 120, 130 steuert. Beispielsweise wird die hintere, von der die Energiewandlungseinheit tragenden Umlenkeinrichtung 80 entfernte Seilklemme 130 in einem ersten Schritt angesteuert, um das durch die Hohlzylinder 100, 110 geführte Hubseil 70 zu klemmen. Darauf kann der weitere Hydraulikzylinder 140 die am vorderen, der Energiewandlungseinheit zugewandten Ende des inneren Hohlzylinders 110 angeordnete Seilklemme 120 ohne das Hubseil 70 zu klemmen in die gewünschte Position, z.B. in Richtung des Turms 20, verfahren und das Hubseil 70 in dieser Position fest einklemmen (vgl. Fig. 1b). Darauf wird die hintere Seilklemme 130 gelöst und die vordere das Hubseil 70 klemmende Seilklemme 110 in Richtung des freien Endes des inneren Hohlzylinders 110 verfahren. Damit wird das Seil 70 bzw. die Energiewandlungseinheit in Richtung Turmfuß abgelassen. Anschließend wird erneut die hintere Seilklemme 130 angesteuert, um das Hubseil 70 zu klemmen, und die Klemmung der vorderen Seilklemme 120 gelöst, woraufhin ein neuer Bewegungs- und Klemmzyklus erfolgen kann, durch den das Hubseil 70 bzw. die Energiewandlungseinheit abgelassen wird.

Zum Anheben der Energiewandlungseinheit wird das Hubseil 70 durch das Zusammenspiel von vorderer und hinterer Seilklemme 120, 130 eingeholt, indem zunächst die hintere Seilklemme 130 das Hubseil 70 fixiert. Darauf wird die vordere Seilklemme 120 ohne Klemmung des Hubseils 70 nach vorne gefahren. Anschließend klemmt die vordere Seilklemme 120 das Hubseil 70 und die hintere Seilklemme 130 gibt das Hubseil 130 frei. Daraufhin bewegt der weitere Hydraulikzylinder 140 die vordere Seilklemme 120 in eine hintere Position, wodurch das Hubseil weiter in Richtung Turm 20 geführt und die Energiewandlungseinheit angehoben wird.

## Patentansprüche

1. Windenergieanlage (10) mit
- einem Turm (20),
- einer im Wesentlichen außerhalb des oberen Turmquerschnitts angeordneten, einen Rotor mit wenigstens einem an einer Nabe (30) angeschlossenen Rotorblatt (40a, 40b), und einen Generator (50) aufweisenden Energiewandlungseinheit,
- einem auf dem Turm (20) angeordneten, die Energiewandlungseinheit mit dem Turm (20) verbindenden Kopfträger (60), und
- einer ein Hubseil (70) aufweisenden Hebeeinrichtung zum Heben und Senken der Energiewandlungseinheit,
**dadurch gekennzeichnet, dass**
die Hebeeinrichtung durch eine Mehrzahl von hydraulischen Linearzylindern (90) gebildet ist, die jeweils aus einem äußeren Hohlzylinder (100) und einem gegen den äußeren Hohlzylinder (100) verschiebbaren inneren Hohlzylinder (110) gebildet sind,
wobei jeder innere Hohlzylinder (110) an seinem freien Ende eine Umlenkeinrichtung (80) zum Überführen eines Hubseils (70) aus einer im Wesentlichen horizontalen Ebene in eine vertikale Ebene aufweist und das Hubseil (70) durch den von vom äußeren und vom inneren Hohlzylinder (100, 110) gebildeten Hohlraum geführt ist.

2. Windenergieanlage (10) nach Anspruch 1, **gekennzeichnet durch** wenigstens eine im inneren Hohlzylinder (110) angeordnete Seilklemme (120, 130).

3. Windenergieanlage (10) nach Anspruch 2, **dadurch gekennzeichnet, dass** die Seilklemme (120) zum Anheben oder Absenken des Hubseils (70) im inneren Hohlzylinder (110) in Längsrichtung hydraulisch verfahrbar ist.

4. Windenergieanlage (10) nach einem der vorhergehenden Ansprüche, **gekennzeichnet durch** eine im äußeren Hohlzylinder (100) angeordnete Seilklemme.

5. Windenergieanlage (10) nach einem der Ansprüche 2 bis 4, **dadurch gekennzeichnet, dass** die Seilklemmen (120, 130) hydraulisch betriebene Seilklemmen (120, 130) sind.

6. Windenergieanlage (10) nach einem der vorhergehenden Ansprüche, **dadurch gekennzeichnet, dass** sich das Tragwerk zu beiden Seiten der Energiewandlungseinheit erstreckt.

7. Windenergieanlage (10) nach einem der vorhergehenden Ansprüche, **dadurch gekennzeichnet, dass** das dem Turm (20) zugewandte Ende des Hubseils (70) im Turm (20) hängend gelagert ist.

## Claims

1. A wind turbine (10) comprising
- a tower (20),
- an energy conversion unit that is arranged substantially outside the upper tower cross-section and that has a generator (50) and a rotor having at least one rotor blade (40a, 40b) connected to a hub (30),
- a head carrier (60) arranged on the tower (20) and connecting the energy conversion unit to the tower (20), and
- a lifting device having a lifting cable (70) for lifting and lowering the energy conversion unit
**characterized in that**
the lifting device is formed by several hydraulic linear cylinders (90) that are formed in each case from an outer hollow cylinder (100) and an inner hollow cylinder (110) that can be displaced relative to the outer hollow cylinder (100),
each inner hollow cylinder (110) having at its free end a redirecting assembly (80) for transferring a lifting cable (70) from a substantially horizontal plane to a vertical plane and the lifting cable (70) being guided through the cavity formed by the outer and the inner cylinders (100, 110).

2. The wind turbine (10) according to Claim 1, **characterized by** at least one cable clamp (120, 130) arranged in the inner hollow cylinder (110).

3. The wind turbine (10) according to Claim 2, **characterized in that** the cable clamp (120) can be moved hydraulically in the longitudinal direction in the inner hollow cylinder (110) for lifting or lowering the lifting cable (70).

4. The wind turbine (10) according to one of the preceding claims, **characterized by** a cable clamp arranged in the outer hollow cylinder (100).

5. The wind turbine (10) according to one of Claims 2 to 4, **characterized in that** the cable clamps (120, 130) are hydraulically operated cable clamps (120, 130).

6. The wind turbine (10) according to one of the preceding claims, **characterized in that** the supporting unit extends on both sides of the energy conversion unit.

7. The wind turbine (10) according to one of the preceding claims, **characterized in that** that end of the lifting cable (70) facing the tower is supported such that it is suspended in the tower (20).

## Revendications

1. Éolienne (10) composée
- d'une tour (20),
- d'une unité de transformation énergétique située hors de la coupe transversale supérieure de la tour, et équipée d'un rotor doté d'au moins une pale (40a, 40b) raccordé à un moyeu (30) ainsi que d'un générateur (50),
- d'un support de tête (60) installé sur la tour (20) et reliant l'unité de transformation d'énergie à la tour, et
- d'un dispositif de levage doté d'un câble de levage (70) permettant de soulever et d'abaisser l'unité de transformation de l'énergie,
**caractérisée en ce que**
le dispositif de levage se compose d'une multitude de cylindres hydrauliques linéaires (90) formés chacun par un cylindre extérieur creux (100) et un cylindre intérieur creux coulissant en direction du cylindre extérieur creux (100),
à savoir que chaque cylindre intérieur creux (110) présente à son extrémité libre un dispositif de guidage (80) permettant de déplacer un câble de levage (70) et de le mettre d'une positions principalement horizontale à une position verticale, et que le câble de levage (70) est guidé par la cavité formée par les cylindres extérieurs et intérieurs creux (100, 110).

2. Éolienne (10) selon la revendication 1, **caractérisée par** au moins une pince de câble (120, 130) située dans le cylindre intérieur creux (110).

3. Éolienne (10) selon la revendication 2, **caractérisée en ce que** la pince de câble (120) peut être déplacée hydrauliquement en direction horizontale dans le cylindre intérieur creux (110) afin de soulever ou d'abaisser le câble de levage (70).

4. Éolienne (10) selon une des revendications susmentionnées, **caractérisée par** une pince de câble située dans le câble extérieur creux (100).

5. Éolienne (10) selon une des revendications 2 à 4, **caractérisée en ce que** les pinces de câble (120, 130) sont des pinces de câble (120, 130) entraînées par énergie hydraulique.

6. Éolienne (10) selon une des revendications précédentes, **caractérisée en ce que** la structure porteuse s'étend des deux côtés de l'unité de transformation d'énergie.

7. Éolienne (10) selon une des revendications précédentes, **caractérisée en ce que** l'extrémité du câble de levage (20) orientée vers la tour (20) est en position suspendue.
